# EUROPÄISCHE PATENTSCHRIFT

(11) **EP 2 013 059 B1**
(45) Veröffentlichungstag und Bekanntmachung des Hinweises auf die Patenterteilung: **11.07.2012**
(21) Anmeldenummer: 07711867.7
(22) Anmeldetag: 09.03.2007
(51) Int. Cl.: F16C 1/12, B60N 2/48

(54) **RÜCKENLEHNE MIT KOPFSTÜTZE, DAMIT AUSGESTATTETER FAHRZEUGSITZ UND MONTAGEVERFAHREN**
BACKREST HAVING A HEADREST, VEHICLE SEAT EQUIPPED WITH THE LATTER, AND ASSEMBLY METHOD
Dossier avec appuie-tête, siège de véhicule équipé de celui-ci et procédé de montage

(30) Priorität: 21.04.2006 DE 102006019176
(43) Veröffentlichungstag der Anmeldung: 14.01.2009
(73) Patentinhaber: Johnson Controls GmbH, 51399 Burscheid (DE)
(72) Erfinder: HARTLAUB, Silvio, 50259 Pulheim - Sinnersdorf (DE)
(74) Vertreter: Hemmelmann, Klaus
(86) Internationale Anmeldenummer: PCT/EP2007/002047
(87) Internationale Veröffentlichungsnummer: WO 2007/121809

(56) Entgegenhaltungen:
- DE-A1-102005 045 045
- US-A- 5 823 619
- US-A1- 2002 074 843

## Beschreibung

Die Erfindung betrifft eine Rückenlehne, insbesondere für einen Kraftfahrzeugsitz, mit einer Kopfstütze, von welcher zumindest ein Teilstück aus mindestens einer Gebrauchsstellung zum Kopf des Sitzinsassen hin in eine Sicherheitsstellung verlagerbar ist, sowie mit einer in der Rückenlehne angeordneten Aktuierungseinrichtung, welche mittels eines mechanischen Übertragungsmittels mit einer Antriebseinrichtung für die Verlagerung mindestens eines Teilstücks der Kopfstütze wirkverbunden ist, wobei das Übertragungsmittel ein erstes, der Aktuierungseinrichtung zugeordnetes Segment sowie ein zweites, der Antriebseinrichtung zugeordnetes Segment aufweist, die mittels einer Kopplungseinrichtung miteinander wirkverbindbar sind, ferner einen damit ausgestatteten Fahrzeugsitz und ein Montageverfahren.

### Stand der Technik

Die Patentanmeldung US 2002/074843 A1 beschreibt eine gattungsgemäße Rückenlehne mit einer Kopfstütze, die mittels einer Aktuierungseinrichtung in eine Sicherheitsstellung verlagerbar ist. Die Aktuierungseinrichtung ist dabei mittels eines geteilten Bowdenzugs mit der Kopfstütze wirkverbunden, wobei die Segmente des Bowdenzugs durch eine Kopplungseinrichtung gekoppelt sind. Die dort beschriebene und dargestellte Kopplungseinrichtung ist für eine selbstfindende Montage ungeeignet.

Eine weitere Rückenlehne ist aus der Druckschrift WO 2005/097545 A2 bekannt. Die Rückenlehne ist mit einer Kopfstütze versehen, die über Haltestangen höhenverstellbar mit der Rückenlehne verbunden ist und einen hinteren Grundkörper sowie ein vorderes Polsterelement aufweist. Im Falle eines Heckaufpralls wird das Polsterelement unter Wirkung der Massenträgheit des in die Rückenlehne gepressten Sitzinsassen zu dessen Kopf hin nach vorne verlagert und verhindert ein Überstrecken der Halswirbel (Schleudertrauma, Whiplash). Die Masse des Sitzinsassen wirkt dabei auf ein im unteren Bereich der Rückenlehne angeordnetes Aktuierungsmittel, welches mechanisch mittels eines durch die Haltestangen geführten Bowdenzugs mit einer Antriebseinrichtung für das Polsterelement der Kopfstütze verbunden ist und die nach hinten gerichtete Verlagerung des Aktuierungsmittels als Zugbewegung der Seele des Bowdenzugs relativ zu dessen Hülle zur Antriebseinrichtung hin überträgt. Dort wird die Zugbewegung der Seele in eine nach vorne gerichtete Verlagerung des Polsterelements umgewandelt.

Das aus WO 2005/097545 A2 bekannte Sicherheitssystem verringert die Verletzungsgefahr für den Sitzinsassen erheblich und ist ferner robust und kostengünstig. Die montierte Einheit aus Kopfstütze und Rückenlehne ist jedoch, insbesondere in Verbindung mit dem Sitzteil des Fahrzeugs, relativ sperrig und damit hinsichtlich Transport und Montage im Fahrzeug verbesserungswürdig.

### Aufgabe

Der Erfindung liegt die Aufgabe zugrunde, die Montage einer gattungsgemäßen Rückenlehne und eines damit ausgestatteten Fahrzeugsitzes zu vereinfachen.

### Lösung

Die Aufgabe wird bei einer Kopfstütze der eingangs genannten Art erfindungsgemäß dadurch gelöst, dass die Kopplungseinrichtung bei der Montage der Kopfstütze selbstfindend ausgebildet ist. Die Aufgabe wird ferner gelöst durch einen mit dieser Rückenlehne ausgestatteten Fahrzeugsitz sowie einem Montageverfahren, bei welchem ein erstes Segment des Übertragungsmittels an der Aktuierungseinrichtung und ein zweites Segment des Übertragungsmittels an der Antriebseinrichtung angebracht werden und das erste und zweite Segment des Übertragungsmittels erst im Zuge der Montage der Kopfstütze an der Rückenlehne, beispielsweise im Fahrzeuginnenraum, miteinander selbstfindend gekoppelt werden.

Die abhängigen Ansprüche betreffen bevorzugte Ausführungsformen der Erfindung.

### Figuren

Die Figuren stellen beispielhaft und schematisch verschiedene Ausführungen der Erfindung dar.

Es zeigen:
- Fig. 1: einen Kraftfahrzeugsitz mit einer erfindungsgemäß ausgebildeten Rückenlehne,
- Fig. 2: eine zur einmaligen, selbstfindenden Verbindung der Segmente des Übertragungsmittels geeignete Übertragungseinrichtung,
- Fig. 3: eine ähnliche, aber zur mehrfachen Montage und Demontage der Kopfstütze geeignete Einrichtung,
- Fig. 4: eine Einrichtung zur manuellen, einmaligen Verbindung der Segmente des Übertragungsmittels,
- Fig. 5: eine weitere derartige Vorrichtung.

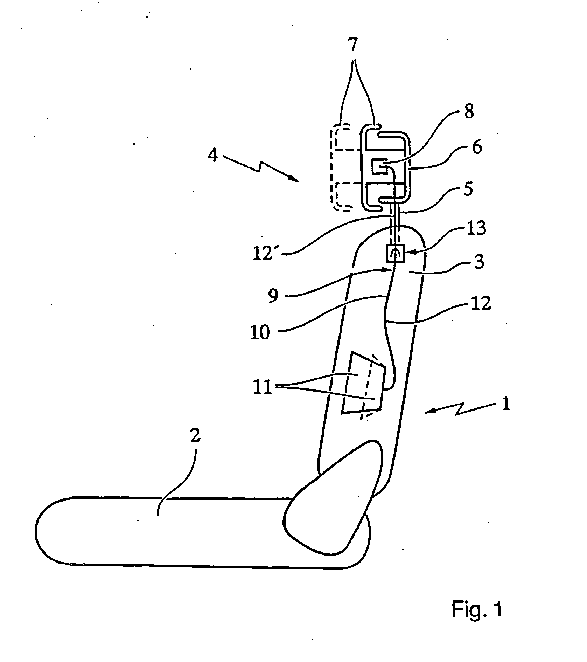

Der in Fig. 1 dargestellte Kraftfahrzeugsitz 1 besteht aus einem Sitzteil 2 und einer Rückenlehne 3, welche mit einer Kopfstütze 4 versehen ist. Die Kopfstütze 4 ist über Haltestangen 5 mit der Metallstruktur der Rückenlehne 3 verbunden und durch Verschieben der Einheit aus Haltestangen 5 und Kopfstütze 4 relativ zur Rückenlehne 3 in verschiedene Gebrauchsstellungen höhenverstellbar. Grundsätzlich ist die Erfindung jedoch auch bei Rückenlehnen 3 anwendbar, bei welchen die Höhenverstellung auf andere Art erfolgt, beispielsweise durch Verschieben der Kopfstütze 4 gegenüber den Haltestangen 5.

Die Kopfstütze 4 besteht aus einem hinteren, fest mit den Haltestangen 5 verbundenen Grundkörper 6 und einem vorderen Polsterelement 7, das aus der gezeigten Gebrauchsstellung nach vorne in Richtung des Kopfes des Sitzinsassen verlagerbar ist (gestrichelte Darstellung). Die Verlagerung wird durch eine Antriebseinrichtung 8 bewirkt, welche mittels eines durch die Haltestangen 5 geführten mechanischen Übertragungsmittels 9 in Form eines Bowdenzugs 10 mit einer Aktuierungseinrichtung 11 im unteren Bereich der Rückenlehne 3 verbunden ist. Die Aktuierungseinrichtung 11 wird durch den Körper des Sitzinsassen nach hinten verlagert (gestrichelte Darstellung), wobei ein Zug auf das Übertragungsmittel 9 ausgeübt wird. Diese Zugbewegung wird durch den Bowdenzug 10 zur Antriebseinrichtung 8 hin übertragen und dort in eine Verschiebung des Polsterelements 7 umgewandelt.

Hinsichtlich der Funktion einer geeigneten Antriebseinrichtung wird ausdrücklich auf die zitierte Druckschrift WO 2005/ 097545 A2 verwiesen. Eine zur Ausführung der Erfindung brauchbare Aktuierungseinrichtung wird beispielsweise in der Patentanmeldung DE 10 2004 048 910 A1 offenbart.

Der Bowdenzug 10 ist im unteren Bereich der Haltestangen 5 in ein erstes, mit der Aktuierungseinrichtung 11 verbundenes Segment 12 und ein zweites, an der Antriebseinrichtung 8 angebrachtes Segment 12' geteilt. Unterhalb der Haltestangen 5 ist in der Rückenlehne 3 eine Kopplungseinrichtung 13 vorgesehen, welche zur mechanischen Verbindung der Segmente 12, 12' geeignet ist. Der Kraftfahrzeugsitz 1 wird ohne Kopfstütze 4 angeliefert und in den Fahrzeugsinnenraum eingebracht. Erst nachfolgend wird die Wirkverbindung von Aktuierungseinrichtung 11 und Antriebseinrichtung 8 durch die Kopplungseinrichtung 13 geschlossen.

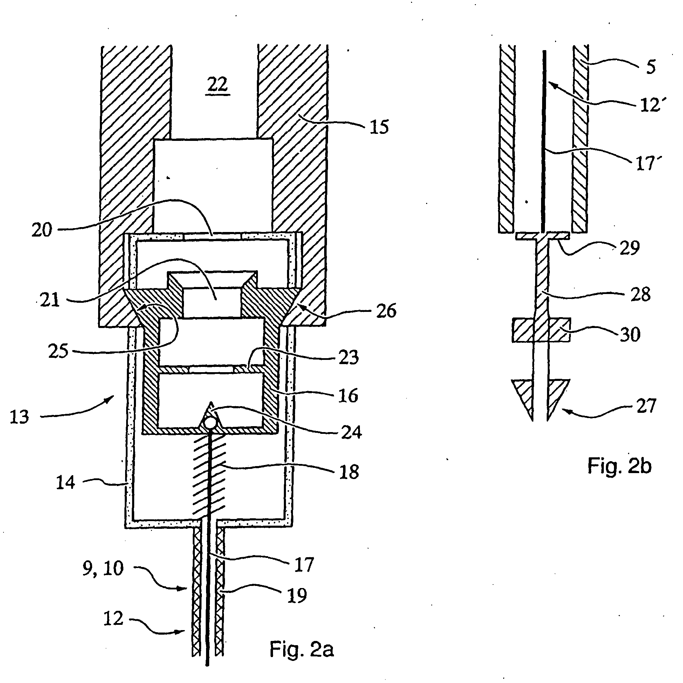

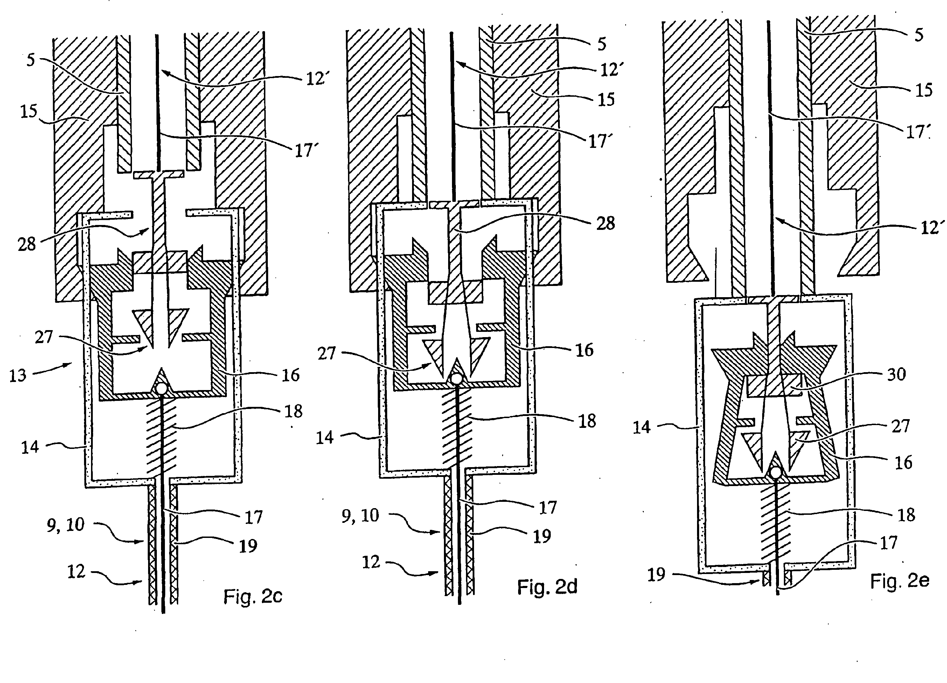

Die in Fig. 2 gezeigte, zur einmaligen Verbindung der Segmente 12, 12' vorgesehene Kopplungseinrichtung 13 besteht rückenlehnenseitig (Fig. 2a) aus einem Käfig 14, welcher lösbar am unteren Ende der später die Haltestange 5 aufnehmenden, in der Rückenlehne 3 verankerten Kopfstützenhülse 15 verrastet ist. Im Käfig 14 ist eine Kupplung 16 vorgesehen, welche die Seele 17 des unteren Segments 12 des Bowdenzugs 10 aufnimmt und durch eine Feder 18 gegenüber dem Käfig 14 nach oben gespannt ist. Die Hülle 19 des Segments 12 stützt sich an der Unterseite des Käfigs 14 ab. Käfig 14 und Kupplung 16 sind an ihrer Oberseite jeweils mit Öffnungen 20, 21 versehen, die koaxial zur Bohrung 22 der Kopfstützenhülse 15 ausgerichtet sind und durch welche das nachfolgend beschriebene, kopfstützenseitige Gegenstück der Kopplungseinrichtung 13 einsetzbar ist.

Im Inneren weist die Kupplung 16 einen Kragen 23 sowie einen Spreizkegel 24 auf, die sich gleichfalls in einer Linie mit der Achse der Bohrung 22 befinden. In ihrem oberen Außenumfang ist die Kupplung 16 ferner mit Schrägflächen 25 versehen, die in vormontiertem Zustand an korrespondierenden Schrägflächen 26 der Kopfstützenhülse 15 derart anliegen, dass bei einer nach unten gerichteten Belastung der Kupplung 16 eine diese komprimierende, also nach innen gerichtete Spannung erzeugt wird.

Kopfstützenseitig (Fig. 2b) besteht die Kopplungseinrichtung 13 aus einem durch Spreizung aufweitbaren, aber auch federnd zusammenpressbaren Haken 27, der mit der Seele 17' des der Antriebseinrichtung 8 zugeordneten Segments 12' des Bowdenzugs 10 verbunden ist. Der Haken 27 sowie eine Führungseinrichtung 28 mit oberen und unteren Ringvorsprüngen 29, 30, die koaxial zur Seele 12' und der Haltestange 5 aufgerichtet sind, ragen nach unten aus der Haltestange 5 hervor. Die nicht gezeigte Hülle des Bowdenzugs 10 stützt sich weiter oben an der Haltestange 5 ab.

Beim Einschieben der Haltestange 5 in die Bohrung 22 der Kopfstützenhülse 15 (Fig. 2c) dringen Haken 27 und Führungseinrichtung 28 selbstfindend durch die Öffnungen 20, 21 in die Kupplung 16 ein, bis der Haken 27 vom Spreizkeil 24 aufgeweitet wird und den Kragen 23 der Kupplung 16 hintergreift (Fig. 2d). Beim weiteren Einschieben der Haltestange 5 werden Kupplung 16 und Käfig 14 durch die Haltestange 5 aus der Kopfstützenhülse 15 gelöst, wobei die Schrägflächen 25, 26 den oberen Teil der Kupplung 16 derart komprimieren, dass der untere Ringvorsprung 30 der Führungseinrichtung 28 unlösbar umschlossen wird (Fig. 2e). Die Kupplung 16 koppelt nun die Seelen 17, 17' der Segmente 12, 12' mechanisch miteinander und vermag eine Zugbewegung der unteren Seele 17 unter Kompression der Feder 18 durch eine Relativbewegung zum Käfig 14 auf die obere Seele 17' zu übertragen.

Bei einer Höhenverstellung der Kopfstütze 4 wird die Haltestange 5 gemeinsam mit der Kopplungseinrichtung 13 gegenüber der Kopfstützenhülse 15 weiter nach unten verschoben. Die Funktion der weiterhin an der Unterseite der Haltestange 5 anliegenden Kopplungseinrichtung 13 wird hierdurch nicht beeinträchtigt.

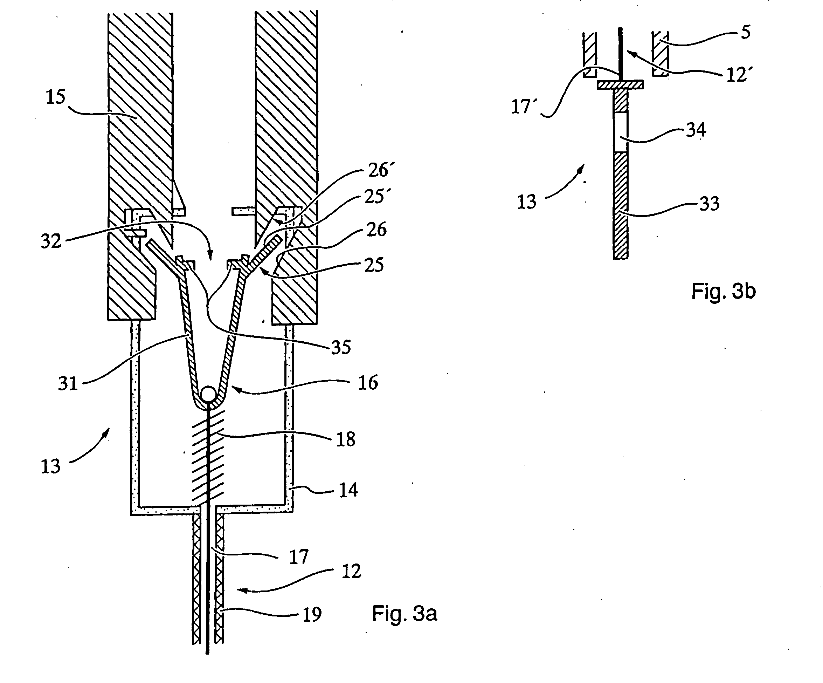

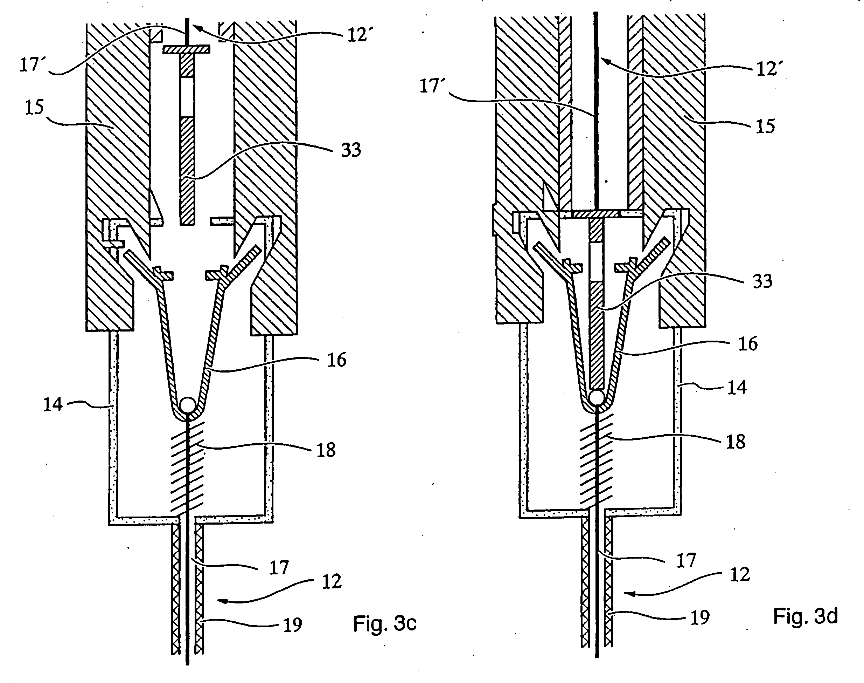

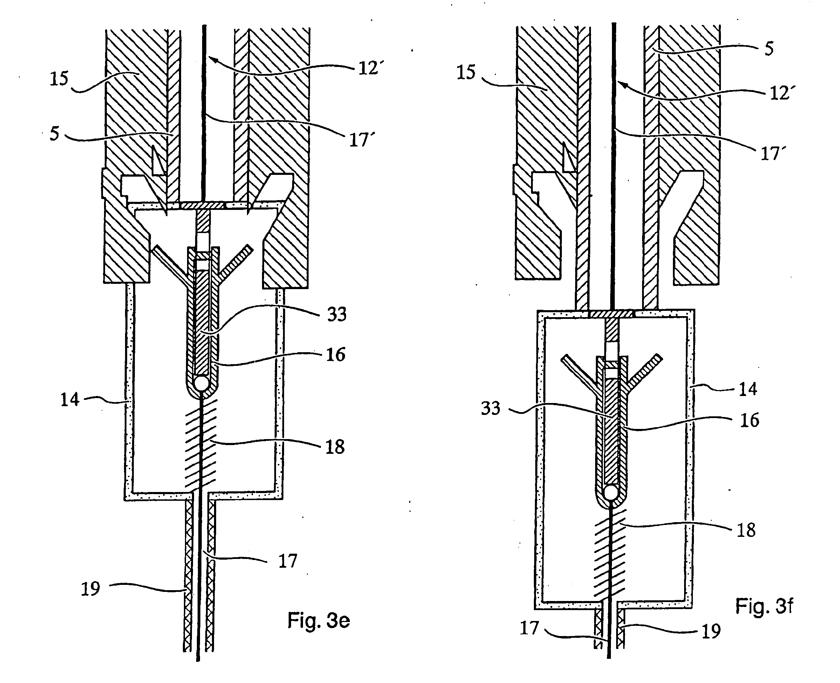

Die Kopplungseinrichtung 13 nach Fig. 3 ist so ausgebildet, dass eine spätere Entnahme und Wiedermontage der Kopfstütze 4 möglich sind. Der wesentliche Unterschied zu der zuvor beschriebenen Vorrichtung besteht darin, dass die Kupplung 16 als nach außen vorgespannte, nach oben geöffnete Schenkelfeder 31 ausgebildet ist, welche mit (nur angedeuteten) Rastmitteln 32 zum lösbaren Verspannen der Schenkel der Schenkelfeder 31 versehen ist. Darüber hinaus weisen Schenkelfeder 31 und Kopfstützenhülse 15 jeweils Paare von Schrägflächen 25, 25', 26, 26' derart auf, dass bei einem nach unten gerichteten Verschieben der Kupplung 16 relativ zur Kopfstützenhülse 15 die Schenkelfeder 31 unter Fixierung durch die Rastmittel 32 zusammengedrückt und bei einem nach oben gerichteten Verschieben die Schenkelfeder 31 unter Lösen der Rastmittel 32 wieder gespreizt wird (Fig. 3a). Das in Fig. 3b gezeigte kopfstützenseitige Gegenstück der Kopplungseinrichtung 13 besteht aus einer einfachen Lasche 33 mit einer Querbohrung 34, in welche nach innen ragende Vorsprünge 35 der Schenkelfeder 31 eingreifen können.

Beim Einsetzen der Haltestange 5 in die Bohrung 22 der Kopfstützenhülse 15 (Fig. 3c) wird die Lasche 33 in die Schenkelfeder 31 eingeführt, bis die Querbohrung 34 der Lasche 33 in Überdeckung mit den Vorsprüngen 35 der Schenkelfeder 31 steht (Fig. 3d). Beim weiteren Einschieben der Haltestange 5 wird der die Kupplung 16 haltende Käfig 14 reversibel aus der Kopfstützenhülse 15 gelöst, wobei die Schrägflächen 25, 26 die Schenkelfeder 31 rastend verschließen. Lasche 33 und Schenkelfeder 31 und somit auch die Seelen 17, 17' des Bowdenzugs 10 sind nachfolgend mechanisch miteinander verbunden (Fig. 3e). Beim weiteren Einschieben der Haltestange 5 wird der Käfig 14 aus der Kopfstützenhülse 15 gelöst.

Wird die Haltestange 5 bei einer späteren Entnahme der Kopfstütze 4 aus der Kopfstützenhülse 15 herausgezogen, spreizen die Schrägflächen 25', 26' die Schenkelfeder 31 wieder auf, wodurch deren Verbindung zur Lasche 33 gelöst wird. Der Käfig 14 wird dabei wieder in seiner Initialstellung in der Kopfstützenhülse 15 verrastet. Die Kopplungseinrichtung 13 befindet sich nun wieder in der Ausgangsstellung nach Fig. 3a und 3b.

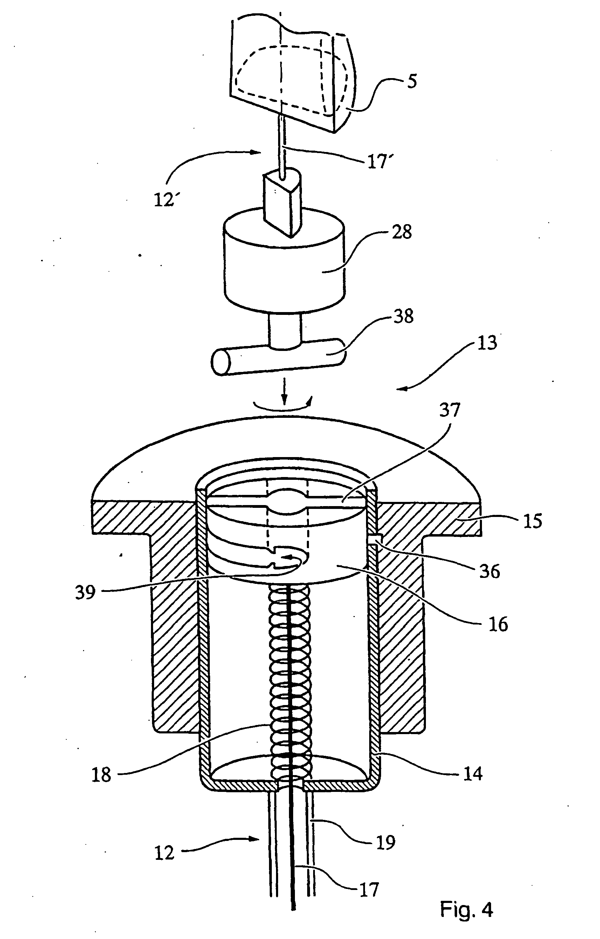

Bei der in Fig. 4 gezeigten Ausbildung der Erfindung besteht die Kopplungseinrichtung 13 aus einem Käfig 14, der verschieblich in die Kopfstützenhülse 15 eingelassen ist, aber in vormontiertem Zustand durch einen an die Kupplung 16 angeformten Scherstift 36 gemeinsam mit dieser an einer Verschiebung gehindert wird. Die Kupplung 16 weist einen sich quer über ihre obere Flächenseite erstreckenden Montageschlitz 37 auf, durch den ein Querbolzen 38 einer mit der Seele 17' verbundenen Führungseinrichtung 28 manuell in die Kupplung 16 einführbar ist. Nach einer Drehung des Querbolzens 38 um 90° wird dieser von Rastmitteln 39 der Kupplung 16 unlösbar erfasst. Nachfolgend wird der Scherbolzen 36 gewaltsam abgeschert, so dass der Käfig 14 und die Kupplung 16 gegeneinander sowie relativ zur Kopfstützenhülse 15 verschieblich sind. Dabei liegt die Haltestange 5 auf der Oberseite des Käfigs 14 auf. Die Seelen 17, 17' sind nun mechanisch miteinander gekoppelt.

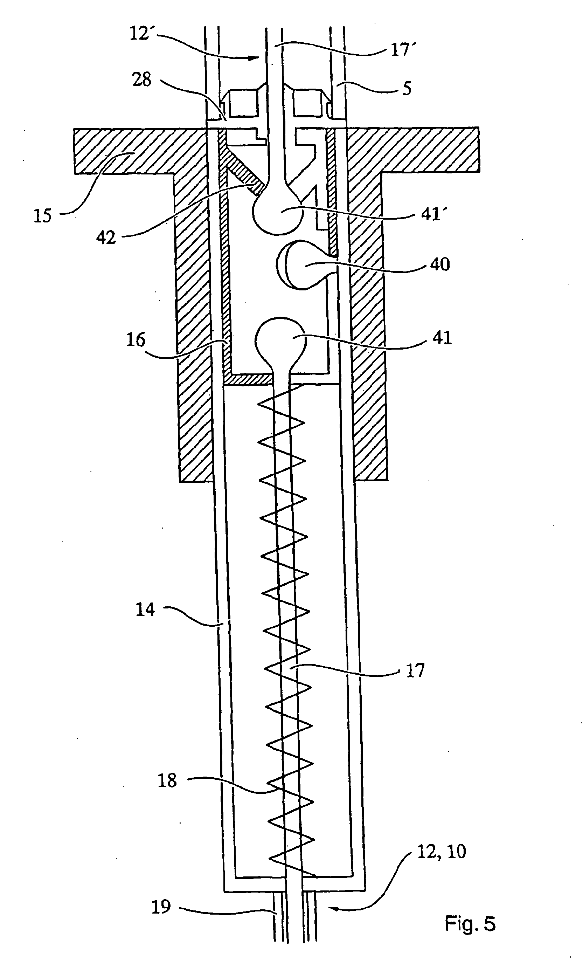

Die in Fig. 5 abgebildete, bereits endmontierte Vorrichtung weist eine becherartige Kupplung 16 auf, die in ihrer radialen Wandung eine runde Montageöffnung 40 für das vorab vorgenommene Einführen eines an die Seele 17 des unteren Segments 12 des Bowdenzugs 10 angeformten, kugelförmigen Mitnehmers 41 aufweist, der in vormontiertem Zustand an der unteren axialen Wandung der Kupplung 16 anliegt. Der gleichfalls kugelförmige Mitnehmer 41' der gegenstückigen Seele 17' wird anschließend von oben her in die Kupplung 16 eingeführt und unlösbar von Federzungen 42 hintergriffen, die von der inneren radialen Wandung der Kupplung 16 her schräg nach unten auskragen und einstückig mit der aus Kunststoff spritzgegossenen Kupplung ausgebildet sind.

Die Ausführungsbeispiele betreffen Ausbildungen der Erfindung, bei welchen die Höhenverstellung der Kopfstütze durch Verschieben der Haltestangen relativ zur Rückenlehne erfolgt. Naturgemäß kann die Erfindung jedoch auch dann Anwendung finden, wenn die Haltestangen fest mit der Rückenlehne verbunden und relativ zur Kopfstütze verschieblich sind. In diesem Fall sind die Abbildungen um 180° gedreht derart zu betrachten, dass die Kopfstützenhülse in der Kopfstütze selbst und nicht in der Rückenlehne angeordnet ist.

### Bezugszeichen

- 1: Kraftfahrzeugsitz
- 2: Sitzteil
- 3: Rückenlehne
- 4: Kopfstütze
- 5: Haltestange
- 6: Grundkörper
- 7: Polsterelement
- 8: Antriebseinrichtung
- 9: Übertragungsmittel
- 10: Bowdenzug
- 11: Aktuierungseinrichtung
- 12, 12': Segment (des Bowdenzugs)
- 13: Kopplungseinrichtung
- 14: Käfig
- 15: Kopfstützenhülse
- 16: Kupplung
- 17: Seele (des Bowdenzugs)
- 18: Feder
- 19: Hülle (des Bowdenzugs)
- 20,21: Öffnung
- 22: Bohrung
- 23: Kragen
- 24: Spreizkegel
- 25, 25': Schrägfläche
- 26, 26': Schrägfläche
- 27: Haken
- 28: Führungseinrichtung
- 29, 30: Ringvorsprung
- 31: Schenkelfeder
- 32: Rastmittel
- 33: Lasche
- 34: Querbohrung
- 35: Vorsprung
- 36: Scherstift
- 37: Montageschlitz
- 38: Querbolzen
- 39: Rastmittel
- 40: Montageöffnung
- 41, 41': Mitnehmer
- 42: Federzunge

## Patentansprüche

1. Rückenlehne (3), insbesondere für einen Kraftfahrzeugsitz (1), mit einer Kopfstütze (4), von welcher zumindest ein Teilstück aus mindestens einer Gebrauchsstellung zum Kopf des Sitzinsassen hin in eine Sicherheitsstellung verlagerbar ist, sowie mit einer in der Rückenlehne angeordneten Aktuierungseinrichtung (11), welche mittels eines mechanischen Übertragungsmittels (9) mit einer Antriebseinrichtung (8) für die Verlagerung mindestens eines Teilstücks der Kopfstütze wirkverbunden ist, wobei das Übertragungsmittel (9) ein erstes, der Aktuierungseinrichtung (11) zugeordnetes Segment (12) sowie ein zweites, der Antriebseinrichtung (8) zugeordnetes Segment (12') aufweist, die mittels einer Kopplungseinrichtung (13) miteinander wirkverbindbar sind, **dadurch gekennzeichnet, dass** die Kopplungseinrichtung (13) bei der Montage der Kopfstütze (4) selbstfindend ausgebildet ist.

2. Rückenlehne nach Anspruch 1, **dadurch gekennzeichnet, dass** das Übertragungsmittel (9) zur Übertragung von Zugbewegungen vorgesehen ist.

3. Rückenlehne nach Anspruch 1 oder 2, **dadurch gekennzeichnet, dass** das Übertragungsmittel (9) ein Bowdenzug (10) ist.

4. Rückenlehne nach einem der vorhergehenden Ansprüche, **dadurch gekennzeichnet, dass** die Kopfstütze (4) über Haltestangen (5) vorzugsweise höhenverstellbar mit der Rückenlehne (3) verbunden ist.

5. Rückenlehne nach Anspruch 4, **dadurch gekennzeichnet, dass** die Kopplungseinrichtung (13) bei der Höhenverstellung der Kopfstütze (4) relativ zu der Rückenlehne (3) oder der Kopfstütze (4) verlagerbar ist.

6. Rückenlehne nach einem der vorhergehenden Ansprüche, **dadurch gekennzeichnet, dass** die Kopplungseinrichtung (13) für die Entnahme der Kopfstütze (4) lösbar ausgebildet ist.

7. Fahrzeugsitz mit einer Rückenlehne nach einem der vorhergehenden Ansprüche.

8. Verfahren zur Montage einer Rückenlehne (3), insbesondere für einen Kraftfahrzeugsitz (1), mit einer Kopfstütze (4), von welcher zumindest ein Teilstück aus mindestens einer Gebrauchsstellung zum Kopf des Sitzinsassen hin in eine Sicherheitsstellung verlagerbar ist, sowie mit einem in der Rückenlehne angeordneten Aktuierungsmittel (11), welches mittels eines mechanischen Übertragungsmittels (9) mit einer Antriebseinrichtung (8) für die Verlagerung mindestens eines Teilstücks der Kopfstütze wirkverbunden ist, **gekennzeichnet durch** folgende Schritte:
- Anbringung eines ersten Segments (12) des Übertragungsmittels (9) am Aktuierungsmittel (11),
- Anbringung eines zweiten Segments (12') des Übertragungsmittels (9) an der Antriebseinrichtung (8),
- selbstfindende Kopplung des ersten und zweiten Segments des Übertragungsmittels im Zuge der Montage der Kopfstütze (4) an der Rückenlehne (3).

9. Verfahren nach Anspruch 8, **dadurch gekennzeichnet, dass** die selbstfindende Kopplung beim Einschieben der Kopfstütze (4) und Rückenlehne (3) verbindenden Haltestangen (3) in die Kopfstütze oder Rückenlehne vorgenommen wird.

## Claims

1. Backrest (3), in particular for a motor vehicle seat (1), having a headrest (4) of which at least one subsection can be shifted from at least one position of use toward the seat occupant's head into a safety position, and having an actuating device (11) which is arranged in the backrest and is operatively connected by means of a mechanical transmission means (9) to a driving device (8) for shifting at least one subsection of the headrest, wherein the transmission means (9) has a first segment (12) assigned to the actuating device (11) and a second segment (12') assigned to the driving device (8), said segments being operatively connectable to each other by means of a coupling device (13), **characterized in that** the coupling device (13) is designed to be self-finding during the assembly of the headrest (4).

2. Backrest according to Claim 1, **characterized in that** the transmission means (9) is provided for transmitting tensile movement.

3. Backrest according to Claim 1 or 2, **characterized in that** the transmission means (9) is a Bowden cable (10).

4. Backrest according to one of the preceding Claims, **characterized in that** the headrest (4) is connected to the backrest (3), preferably in a height-adjustable manner, via holding rods (5).

5. Backrest according to Claim 4, **characterized in that** the coupling device (13) can be shifted relative to the backrest (3) or the headrest (4) during the height adjustment of the headrest (4).

6. Backrest according to one of the preceding claims, **characterized in that** the coupling device (13) is designed to be releasable for the removal of the headrest (4).

7. Vehicle seat having a backrest according to one of the preceding claims.

8. Method for assembling a backrest (3), in particular for a motor vehicle seat (1), having a headrest (4) of which at least one subsection can be shifted from at least one position of use toward the seat occupant's head into a safety position, and having an actuating means (11) which is arranged in the backrest and is operatively connected by means of a mechanical transmission means (9) to a driving device (8) for shifting at least one subsection of the headrest, **characterized by** the following steps:
- attaching a first segment (12) of the transmission means (9) to the actuating means (11),
- attaching a second segment (12') of the transmission means (9) to the driving device (8),
- coupling the first and second segments of the transmission means in a self-finding manner over the course of assembling the headrest (4) on the backrest (3).

9. Method according to Claim 8, **characterized in that** the self-finding coupling is undertaken when holding rods (5) connecting the headrest (4) and backrest (3) are pushed into the headrest or backrest.

## Revendications

1. Dossier (3), en particulier pour un siège de véhicule automobile (1), comprenant un appuie-tête (4) dont au moins une partie partielle peut être déplacée depuis au moins une position d'utilisation vers la tête de l'occupant du siège dans une position de sécurité, et comprenant également un dispositif d'actionnement (11) disposé dans le dossier, lequel est en liaison fonctionnelle au moyen d'un moyen de transmission mécanique (9) avec un dispositif d'entraînement (8) pour le déplacement d'au moins une partie partielle de l'appuie-tête, le moyen de transmission (9) présentant un premier segment (12) associé au dispositif d'actionnement (11) ainsi qu'un deuxième segment (12') associé au dispositif d'entraînement (8), lesquels peuvent être reliés fonctionnellement l'un avec l'autre au moyen d'un dispositif d'accouplement (13), **caractérisé en ce que** le dispositif d'accouplement (13) est réalisé de manière à se positionner automatiquement lors du montage de l'appuie-tête (4).

2. Dossier selon la revendication 1, **caractérisé en ce que** le moyen de transmission (9) est prévu pour transmettre des mouvements de traction.

3. Dossier selon la revendication 1 ou 2, **caractérisé en ce que** le moyen de transmission (9) est un câble Bowden (10).

4. Dossier selon l'une quelconque des revendications précédentes, **caractérisé en ce que** l'appuie-tête (4) est relié au dossier (3) par le biais de barres de fixation (5) de préférence de manière réglable en hauteur.

5. Dossier selon la revendication 4, **caractérisé en ce que** le dispositif d'accouplement (13) peut être déplacé lors du réglage en hauteur de _{l'appuie-}tête (4) par rapport au dossier (3) ou l'appuie-tête (4).

6. Dossier selon l'une quelconque des revendications précédentes, **caractérisé en ce que** le dispositif d'accouplement (13) est réalisé de manière amovible pour enlever l'appuie-tête (4).

7. Siège de véhicule comprenant un dossier selon l'une quelconque des revendications précédentes.

8. Procédé de montage d'un dossier (3), en particulier pour un siège de véhicule automobile (1), comprenant un appuie-tête (4), dont au moins une partie partielle peut être déplacée depuis au moins une position d'utilisation vers la tête de l'occupant du siège dans une position de sécurité, et comprenant également un dispositif d'actionnement (11) disposé dans le dossier, lequel est en liaison fonctionnelle au moyen d'un moyen de transmission mécanique (9) avec un dispositif d'entraînement (8) pour le déplacement d'au moins une partie partielle de l'appuie-tête, **caractérisé par** les étapes suivantes :
- montage d'un premier segment (12) du moyen de transmission (9) sur le moyen d'actionnement (11),
- montage d'un deuxième segment (12') du moyen de transmission (9) sur le dispositif d'entraînement (8),
- accouplement du premier et du deuxième segment du moyen de transmission de manière à se positionner automatiquement au cours du montage de l'appuie-tête (4) sur le dossier (3).

9. Procédé selon la revendication 8, **caractérisé en ce que** l'accouplement de manière à se positionner automatiquement est effectué lors de l'enfoncement de barres de fixation (5) reliant l'appuie-tête (4) et le dossier (3) dans l'appuie-tête ou dans le dossier.
